(19) Europäisches Patentamt

European Patent Office

Office européen des brevets

(11) **EP 4 025 635 B1**

(12) **EUROPEAN PATENT SPECIFICATION**

(45) Date of publication and mention
of the grant of the patent:
**15.10.2025 Bulletin 2025/42**

(21) Application number: **20751587.5**

(22) Date of filing: **12.08.2020**

(51) International Patent Classification (IPC):
$C08J\ 9/00^{(2006.01)}$    $C08J\ 9/14^{(2006.01)}$
$C08J\ 9/16^{(2006.01)}$    $C08L\ 25/06^{(2006.01)}$
$C08K\ 3/04^{(2006.01)}$    $C08K\ 3/26^{(2006.01)}$
$C08K\ 5/01^{(2006.01)}$    $C08K\ 13/02^{(2006.01)}$
$C08L\ 23/06^{(2006.01)}$    $C08L\ 53/02^{(2006.01)}$

(52) Cooperative Patent Classification (CPC):
(C-Sets available)
**C08J 9/0066; C08J 9/0061; C08J 9/0095;
C08J 9/141; C08J 9/16; C08L 25/06;**
C08J 2203/14; C08J 2325/06; C08J 2423/06;
C08J 2453/02; C08K 3/04; C08K 3/26; C08K 5/01;
C08L 2205/03      (Cont.)

(86) International application number:
**PCT/EP2020/072594**

(87) International publication number:
**WO 2021/043552 (11.03.2021 Gazette 2021/10)**

(54) **EXPANDABLE VINYL AROMATIC POLYMERS WITH IMPROVED FLAME RETARDANCY**

SCHÄUMBARE VINYLAROMATISCHE POLYMERE MIT VERBESSERTER FLAMMWIDRIGKEIT

POLYMÈRES VINYLE-AROMATIQUES EXPANSIBLES À RÉSISTANCE AU FLAMME AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2019 EP 19195471**

(43) Date of publication of application:
**13.07.2022 Bulletin 2022/28**

(73) Proprietor: **TotalEnergies OneTech Belgium
7181 Seneffe (BE)**

(72) Inventors:
• **VACHAUDEZ, Magali
7332 Neufmaison (BE)**

• **DELEYE, Jean-Claude
1540 Herne (BE)**
• **IACOLINA, Amelio
7332 Sirault (BE)**
• **MICHEL, Jaques
7181 FELUY (BE)**

(74) Representative: **AWA Benelux
Parc d'affaires Zénobe Gramme - Bât. K
Square des Conduites d'Eau 1-2
4020 Liège (BE)**

(56) References cited:
**EP-A1- 2 921 520     WO-A1-2018/069178**

EP 4 025 635 B1

(52) Cooperative Patent Classification (CPC): (Cont.)

C-Sets
**C08L 25/06, C08K 13/02, C08L 23/06, C08L 53/025**

**Description**

**Field of the Invention**

The present invention relates to flame retarded expandable vinyl aromatic polymers, their production and foams produced therefrom.

Expanded vinyl aromatic foams, in particular polystyrene foams have been known for a long time and have numerous applications in many fields. Such foams are produced by heating polystyrene particles impregnated with blowing agents to achieve an expansion in a mold where the expanded particles are welded together to achieve molded parts. A significant application area of such molded panels is thermal insulation in building and construction.

It is known that the thermal conductivity of foams can be reduced by incorporation of athermanous materials such as carbon black, coke, graphite, metal oxides, metal powder or pigments

The incorporation of thermal insulation increasing material in expandable vinyl aromatic polymers is disclosed for example in EP 1486530, EP 620246, EP 0915127, EP1945700, EP 1877473, EP 2274370, EP 2358798, EP 2454313, EP 372343, EP 674674, EP 902804, EP 863175, EP 1137701, EP 1102807, EP 0981575, EP 2513209, EP0915127, DE 19910257, DE 202010013850, US 2011/213045, WO97/45477, WO9851735, WO 2004/087798, WO 2008/061678, WO 2010/128369, WO 2010/141400, WO 2011/042800 and WO 2011/133035, WO 2011/110333, WO2011/122034, WO 2013/064444, WO 2014/102139, WO 2014/063993, WO 2014/102137, WO 2014/122190 and JP 2005002268.

Styrene-based polymers have the property of burning vigorously with evolution of black smoke once ignited. For this reason, it is imperative to flameproof the polymers by the addition of a flame retardant in order to be endowed with fire resistance properties that enable to have a good rating according to the DIN 4102-1 (B1 or B2) , EN ISO 11925-2, EN ISO 13823 and EN ISO 13501-1.

The flame-retardant agents particularly suitable for being used in the expandable vinyl aromatic compositions are chlorinated and/or brominated aliphatic, cycloaliphatic and aromatic compounds.

Flame retardants in which all of bromine atoms are bonded to aliphatic carbon, such as hexabromocyclododecane have already clearly demonstrated their efficiency.

Since hexabromocyclododecane has a bioaccumulation property, is toxic for aquatic organisms, and is hardly decomposed, a brominated polymer type flame retardant is considered as a substitute.

Brominated polymers, in particular brominated block copolymers, for use as flame retardant in expandable vinyl aromatic polymers are disclosed in for example WO 2014/027888 and WO 2013/009469.

However, the brominated polymer type flame retardants have insufficient thermal stability, and may be thermally deteriorated, causing black foreign substances or discoloration, when exposed to a high temperature and residence time, such as for example in a process for mixing the brominated polymer type flame retardant with a styrene-based polymer to manufacture a flame-retardant resin composition in an extrusion process.

Thermally stable brominated copolymers are disclosed in EP 1 957 544.

Thermal stability of halogenated flame retardants, in general, has been improved through the introduction of acid scavengers such a metal salts, triazine and epoxy containing organic compounds among others.

EP 2 379 628 discloses aliphatic bromine containing polymers, stabilized using a mixture of an alkylphosphite and an epoxy compound. The stabilizer package is very effective for the polymer subjected to high temperatures as are seen in melt processing operations.

EP 2 998 347 discloses a recyclable flame-retardant expandable styrene resin composition having a high flame retardancy and thermal stability with a small amount of a bromine-containing flame retardant added. The flame-retardant expandable styrene resin composition contains (A) a styrene resin, (B) a bromine-containing organic compound, (C) zinc oxide, and (D) a foaming agent, wherein an amount of (C) is less than 2 parts by weight per 100 parts by weight of (A) the styrene resin. The flame-retardant expandable styrene resin composition can further contain (E) a thermal stabilizer. Examples of the thermal stabilizer include a phosphite compound, a thioether compound, a hindered phenol compound, a hindered amine compound, an organic tin compound, a phosphoric acid ester, and hydrotalcite.

EP 3 301 134 discloses a flame-retardant resin composition, for extrusion molding, containing 0.8 to 15 parts by mass of a halogen capture agent, 0.8 to 7 parts by mass of an antioxidant, and 0.8 to 6 parts by mass of liquid paraffin based on a total of 100 parts by mass of a styrene-based resin and brominated polymer type flame retardant wherein the content of bromine is 18 to 42% by mass. Examples of halogen capture agent include a dolomite-based compound, a hydrotalcite-based compound. The hydrotalcite-based compound is one kind of naturally produced clay minerals represented by $Mg_6Al_2(OH)_{16}CO_3 \cdot nH_2O$ or the like.

EP 2 921 520 discloses a recyclable flame-retardant foamed styrene resin composition having high flame-retardancy and heat stability by adding little bromine-containing flame retardant. A flame-retardant foamed styrene resin composition containing (A) a styrene resin, (B) a mixture of (B1) tetrabromobisphenol A-bis(2,3-dibromo-2-methylpropyl ether) and (B2) another bromine-containing flame retardant, (C) zinc-modified hydrotalcite, (D) zeolite, and (G) a foaming agent, containing 0.005-0.08 parts by weight of (C) per 100 parts by weight of (A) the styrene resin.

WO 2018/069178 describes expandable polystyrene compositions that comprise between 3 and 8 wt.-% of coke particles with a D50 comprised between 1 and 5 $\mu$m, between 2 and 10 wt.-% of a blowing agent, between 0.2 and 3 wt.-% of a brominated styrene/butadiene-block copolymer, polyethylene wax, and, optionally, a thermal stabilizer.

Without being limitative, the interaction of athermanous material with the flame retardant and/or its synergist is a major issue since higher amounts of flame retardant have some times to be introduced in the expandable styrene polymer in order to have a good rating (B1 or B2) according to the DIN 4102-1 test, and the single burning item (SBI) test according EN 13823 and classified according to EN 13501-1. All athermanous additives have a certain influence on the cell formation and thus on expansion capabilities, density and open cell rate which again influences fire resistance and thermal conductivity.

Without contesting the associated advantages of the state of the art systems, it is nevertheless obvious that there is still a need for expandable vinyl aromatic polymers, intended for thermal insulation in building and construction applications wherein outstanding insulation properties are combined with good flame retardancy obtained from the incorporation of the lowest possible amounts of non-toxic, environmental safe flame retardants.

**Aims of the Invention.**

The present invention aims to provide expandable vinyl aromatic polymers enabling the production of expanded beads allowing molded parts such as insulation panels with an improved fire resistance at lower flame retardant concentrations and simultaneously a reduced thermal conductivity obtained in an economically attractive and a safe way.

**Drawings**

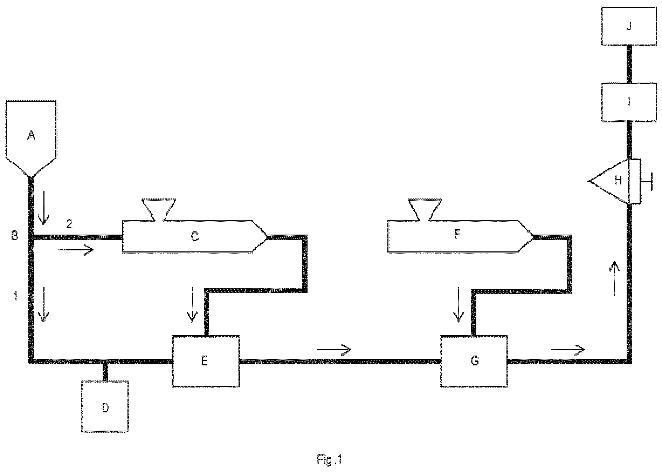

Figure 1 represents a flow-sheet for the production of expandable vinyl aromatic polymer wherein:

(A) is the polymerization reactor producing a polymer melt stream;
(B) is the branching point where part of the polymer melt stream is derived creating a first polymer melt stream 1 and a second polymer melt stream 2
(C) is the mixing unit, preferably an extruder, where comminuted coke particles and foam cell regulator, preferably polyethylene wax are dispersed in the derived second polymer melt stream 2;
(D) is the unit for the addition of blowing agent, preferably n-pentane and/or isopentane, to the first polymer melt stream 1;
(E) is the merging point where both polymer melt streams (1; 2) join through a static mixer forming a new joint polymer melt stream;
(F) is the extruder where flame retardant agent and synergist are blended, optionally with vinyl aromatic polymer, before being fed into the new joint polymer stream through (G) to form the expandable vinyl aromatic polymer melt;
(H) is the under-water pelletizing unit;
(I) is the drying unit;
(J) is the packaging unit.

**Summary of the Invention**

The present invention discloses an expandable vinyl aromatic polymer composition comprising:

-    from 0.5 to 15, preferably from 1 to 10 parts by weight of dispersed athermanous particles selected from the group consisting of coke, carbon black, graphite and combinations of them, having a volume median particle diameter (D50) comprised between 0.5 and 35 $\mu$m, preferably between 0.8 and 20 $\mu$m more preferably between 1 and 10 $\mu$m, as obtained from laser light scattering measurements according to ISO 13320 using MEK as solvent for vinyl aromatic polymers;

-    from 2 to 10 parts by weight, preferably from 3 to 7 parts by weight of blowing agent;

-    from 0.2 to 5 parts by weight, preferably from 0.3 to 4 parts by weight, more preferably from 0.4 to 3 parts by weight of a halogenated flame retardant; and

-    from 0.02 to 5 parts by weight, preferably from 0.025 to 4 parts by weight of a zinc-modified hydrotalcite;

per 100 parts of vinyl aromatic polymer,
wherein the halogenated flame retardant is a halogenated block copolymer, characterized by a weight average molecular weight comprised between 20,000 and 300,000 g/mol, preferably between 30,000 and 200,000 g/mol, as determined by gel permeation chromatography against polystyrene standards and comprising:

- from 20 to 60 % by weight, preferably from 30 to 50 % by weight of sequences (A) of polymerized monovinyl arenes and from 40 to 80 % by weight, preferably from 50 to 70 % by weight of sequences (B) of polymerized conjugated alkadienes or copolymerized conjugated alkadienes and monovinyl arenes, and;
- from 20 to 80 % by weight, preferably from 40 to 70 % by weight of halogen substituents, preferably bromine.

Preferred embodiments of the present invention disclose one or more of the following features:

- the vinyl aromatic polymer composition comprise from 0.02 to 5.0 parts by weight, preferably from 0.025 to 4 parts by weight of a stabilizer selected from the group consisting of organophosphites, hindered phenolic antioxidants and mixtures thereof;
- the halogenated block copolymer is a brominated styrene-butadiene block copolymer characterized by a 5 % by weight loss at a temperature of at least 250°C, preferably at a temperature of at least 260°C, as obtained from thermogravimetric analysis according to ISO11358;
- the expandable vinyl aromatic polymer composition comprises between 0.05 and 5 % by weight, preferably between 0.1 and 3.0 % by weight of a flame retardant synergist, preferably a radical generator of the type comprising a C-C, C-O-O-C or S-S thermo-labile bond;
- the blowing agent is a C3 - C6 alkane, preferably a C4 -C5 alkane blowing agent or a mixture thereof;
- the zinc modified hydrotalcite is of the formula:

$$[Mg_aZn_bAl_x(OH)_2]^{x+}(A^{n-})_{x/n}.mH_2O,$$

wherein:

$$0.5 \leq a+b < 1.0;$$

$$0 < x \leq 0.5$$

and

$$a+b = 1-x;$$

m is a positive number,
and A is an n-valent anion;

- the expandable vinyl aromatic polymer comprises from 0.01 to 2.0 parts by weight, preferably from 0.05 to 1 parts by weight of high density polyethylene as cell regulator, per 100 parts of vinyl aromatic polymer;
- the polyethylene is characterized by a weight average molecular weight (Mw) comprised between 1,500 and 10,000 g/mol, preferably between 1,500 and 8,000 g/mol, more preferably between 1,500 and 6,000 g/mol and with a polydispersity of 3 or less, preferably of 2 or less, more preferably of 1.5 or less, and most preferably of 1.2 or less, as determined by gel permeation chromatography (GPC) in tetrahydrofuran using polystyrene standards.

The present invention further discloses a method for the preparation of beads or granules of the expandable vinyl aromatic polymer, comprising the steps of:

a) producing a polymer melt stream after the polymerization process of the vinyl aromatic monomer;
b) deriving a part of said polymer stream and creating a first polymer melt stream (1) and a side loop with a second polymer melt stream 2;
c) dispersing at least the athermanous particles and the foam cell regulator into said second polymer melt stream 2;
d) introducing a blowing agent into the first polymer melt stream 1;
e) joining the second polymer melt stream 2 and the first polymer melt stream 1 and forming a new joint polymer melt stream
f) cooling the new joint polymer melt stream to a temperature of 200°C or less;
g) introducing at least one halogenated flame retardant, flame retardant synergist and zinc-modified hydrotalcite into the said cooled new joint polymer melt stream;

h) discharging the cooled new joint polymer melt stream through a die plate with holes and pelletizing the melt under water into a water circuit under a pressure above 3 bar, preferably above 5 bar.

Preferred embodiments of the process for the preparation of beads or granules of the expandable vinyl aromatic polymer disclose one or more of the following features:

- the second polymer melt stream 2 of step b) comprises between 5 and 30 % by weight of the total polymer melt stream.
- in step c), the athermanous particles and the foam cell regulator are dispersed in the second polymer melt stream 2 by means of an extruder.
- the dispersion in step c) is performed at a temperature comprised between 180°C and 250°C, more preferably between 200°C and 240°C, most preferably between 210°C and 230°C.
- in step g) one or more additional stabilizer(s) are added, said stabilizers being selected from the group consisting of organophosphite and hindered phenolic antioxidants.

The present invention additionally discloses polymer foams obtained from the molding of the expanded vinyl aromatic polymers obtained by the expansion of the expandable vinyl aromatic polymer composition said foams being characterized by:

- a thermal conductivity, in accordance to DIN 52612, of less than 34 mW/m.K, for a foam density, in accordance to ASTM 303 C, of less than 20 kg/m$^3$;
- a fire retardancy with B2 rating, in accordance to DIN 4102-1;
- a flame height of less than 10 cm according to DIN 4102-1 at 6 cm thickness; and
- a "B, s2,d0" classification according to EN 13501-1, after being subjected to testing according to EN 11925-2 and EN 13823, for test panels at 60 mm thickness and 20 kg/m$^3$ density being mounted and fixed according to EN15715 and EN 13238.

## Detailed description of the Invention

It is an object of the present invention to provide expandable vinyl aromatic polymer compositions, which can be processed to expanded foams which have both a low density and a low thermal conductivity, good processing properties and, in particular, very good flame retardant properties.

The present invention provides a flame-retardant foamable vinyl aromatic polymer composition comprising a vinyl aromatic polymer, athermanous particles, halogenated flame retardant and zinc-modified hydrotalcite.

The vinyl aromatic polymers preferably used in the present invention comprise glass-clear polystyrene (GPPS), impact-resistant polystyrene (HIPS), anionically polymerized polystyrene or impact-resistant polystyrene (AIPS), styrene-alpha-methylstyrene copolymers, acrylonitrile-butadiene-styrene polymers (ABS), styrene-acrylonitrile polymer (SAN), acrylonitrile-styrene-acrylate (ASA), styrene acrylates, such as styrene-methyl acrylate (SMA) and styrene-methyl methacrylate (SMMA), methyl methacrylate-butadiene-styrene (MBS), methyl methacrylate-acrylonitrile-butadiene-styrene (MABS) polymers, styrene-N-phenylmaleimide copolymers (SPMI) or a mixture thereof, or a mixture of the above-mentioned styrene polymers with polyolefins, such as polyethylene or polypropylene, and polyphenylene ether (PPE).

The weight average molecular weight of the expandable vinyl aromatic polymers, in particular styrene polymers, of the present invention is preferably in the range from 120,000 to 400,000 g/mol, particularly preferably in the range from 160,000 to 300,000 g/mol, measured by means of gel permeation chromatography against polystyrene standards. The molar mass of the expandable vinyl aromatic polymers, in particular styrene polymers, in the extrusion processes is generally below the molar mass of the vinyl aromatic polymers, in particular of the polystyrene, used, by 10,000 g/mol, because of the degradation of molar mass caused by shear and/or by heat.

The abovementioned vinyl aromatic polymers, in particular styrene polymers, can be blended with thermoplastic polymers, such as polyamides (PA), polyolefins, e.g. polypropylene (PP) or polyethylene (PE), polyacrylates, e.g. polymethyl methacrylate (PMMA), polycarbonate (PC), polyesters, e.g. polyethylene terephthalate (PET) or polybutylene terephthalate (PBT), polyether sulfones (PES), polyether ketones, or polyether sulfides (PES), or a mixture thereof, generally in total proportions of up to at most 30 % by weight, preferably in the range from 1 to 10 % by weight, based on the polymer melt, in order to improve mechanical properties or heat resistance, optionally with use of compatibilizers. Mixtures within the abovementioned ranges of amounts are also possible with, for example, hydrophobically modified or functionalized polymers or oligomers, rubbers, e.g. polyacrylates or polydienes, for example styrene-butadiene block copolymers, or biodegradable aliphatic or aliphatic/aromatic copolyesters.

The athermanous particles preferably comprise carbon black, coke, graphite or a combination thereof. The athermanous particles for being used in the expandable vinyl aromatic polymers of the present invention are characterized by a particle size distribution, as determined by laser diffraction according to ISO 13320 using MEK as solvent for vinyl aromatic polymers, with a volume median particle diameter (D50) comprised between 0.5 and 35 μm, preferably between 0.8 and 20 μm, more preferably between 0.8 and 20 μm and more preferably between 1 and 10 μm and are present in an amount comprised between 0.5 and 15 parts by weight, preferably between 1 and 10 parts by weight for 100 parts by weight of vinyl aromatic polymer.

The technique of laser diffraction is based on the principle that particles passing through a laser beam will scatter light at an angle that is directly related to their size: large particles scatter at low angles, whereas small particles scatter at high angles. The laser diffraction is accurately described by the Fraunhofer approximation and the Mie theory, with the assumption of spherical particle morphology.

A sample presentation system ensures that the material under test passes through the laser beam as a homogeneous stream of particles in a known, reproducible state of dispersion, for particle concentrations adjusted to have a suitable transmission percentage.

The particle size distribution has been measured by laser light scattering using the particle size analyzer (HORIBA 920) from (Horiba Scientific) according to ISO 13320. For Horiba 920, the suitable transmission percentage is situated between 70 and 95.

Specific examples of bromine-containing flame retardant include hexabromocyclododecane , tris(2,3-dibromopropyl) isocyanurate, tetrabromobisphenol S-bis(2,3-dibromopropyl ether), tetrabromobisphenol F-bis(2,3-dibromopropyl ether), tetrabromobisphenol A, hexabromobenzene, pentabromotoluene, polybromodiphenyl ether, polybromodiphenylethane, bispolybromophenoxyethane, tris(tribromophenoxy)triazine, polybromophenylindan, polypentabromobenzyl acrylate, ethylenebistetrabromophthalimide, tris(tribromoneopentyl) phosphate, brominated epoxy resin oligomers and mixtures of two or more bromine-containing flame retardants.

Preferably the flame retardant for being used in the expandable vinyl aromatic compositions of the present invention is chosen from tetrabromobisphenol A-bis(2,3-dibromopropyl ether), tetrabromobisphenol A-bis(2,3-dibromo-2-methylpropyl ether) or brominated polymers, present in an amount of from 0.2 to 5 parts by weight, preferably of from 0.3 to 4 parts by weight, more preferfably from 0.4 to 3 parts by weight per 100 parts of vinyl aromatic polymer.

More preferably the flame-retardant agents for being used in the expandable vinyl aromatic compositions of the present invention are brominated block copolymers obtained from the bromination of block copolymers comprising from 20 to 60% by weight, preferably from 30 to 50% by weight of sequences (A) of polymerized monovinyl arenes and from 40 to 80% by weight, preferably from 50 to 70% by weight of sequences (B) of polymerized conjugated alkadienes or copolymerized conjugated alkadienes and monovinyl arenes, said brominated block copolymers comprising from 20 to 80% by weight, preferably from 40 to 70 % by weight of bromine.

The mono vinyl arene units preferably are styrene units formed by polymerizing styrene. However, other mono vinyl arene units can be present, such as α-methyl styrene, 2-, 3- or 4-methyl styrene, other alkyl-substituted styrenes such as ethyl styrene. Mixtures of two or more different types of mono vinyl arene units can be present.

The block copolymers are further characterized by a weight average molecular weight comprised between 20,000 and 300,000 g/mol, preferably between 30,000 and 200,000 g/mol as determined by gel permeation chromatography against polystyrene standards.

The halogenated block copolymer may be a diblock copolymer or triblock copolymer. A triblock copolymer preferably includes a central block of sequence (B) with terminal blocks of sequence (A).

Brominated block copolymers containing at least 35% by weight bromine are preferred.

At least 90%, of the bromine is bonded to the monomer units of sequence (B). As much as 100% of the bromine may be bonded the monomer units of sequence (B).

Preferably the halogenated block copolymer is a brominated styrene-butadiene block copolymer.

The brominated vinyl aromatic-butadiene block copolymer preferably is a diblock copolymer, more preferably triblock copolymer including a central polybutadiene block with terminal blocks of the polymerized vinyl aromatic monomer.

Brominated vinyl aromatic-butadiene block copolymers containing at least 45% by weight bromine are preferred.

Bromination produces brominated 1,2-butadiene and 1,4-butadiene units.

The brominated vinyl aromatic-butadiene copolymers may be produced as for example described, in WO 2008/021417, WO 2010/114637, WO 2009/134628, WO 2008/021418 and WO 2008/021418.

The brominated vinyl aromatic-butadiene copolymer should have a 5% weight loss temperature of at least 200°C, preferably at least 220°C, more preferably at least 240°C and most preferably at least 250°C. The 5% weight loss temperature is preferably no greater than 300°C, more preferably no greater than 280°C. 5% weight loss temperature is measured by thermogravimetric analysis (TGA).

The expandable vinyl aromatic polymer compositions of the present invention comprise between 0.2 and 5 parts by weight, preferably between 0.3 and 4 parts by weight more preferably between 0.4 and 3 parts by weight of the halogenated polymers, preferably brominated block copolymers, per 100 parts by weight of the vinyl aromatic polymer.

The effectiveness of the halogenated fire retardant agent can be still further improved via addition of suitable flame retardant synergists, examples being the thermal free-radical generators of the type comprising a C-C or C-O-O-C or S-S thermo-labile bond

Examples of such a radical generator include cumene peroxide, cumene hydroperoxide, di-tert-butyl peroxide, di-tert-hexylperoxide, 2,5-dimethyl-2,5-di(tert-butylperoxy)hexyne-3, dicumyl peroxide, and 2,3-dimethyl-2,3-diphenylbutane. Dicumyl peroxide and 2,3-dimethyl-2,3-diphenylbutane are preferred. Flame retardant synergists are generally used in amounts of from 0.05 to 5 parts by weight, preferably in amounts of from 0.1 to 3 parts by weight per 100 parts of vinyl aromatic polymer.

The heat stabilizer for being used in the expandable vinyl aromatic compositions of the present invention is zinc-modified hydrotalcite, a layered double hydroxide resulting from replacement of part of Mg of hydrotalcite $Mg_6Al_2(OH)_{16}$ $(CO_3).4H_2O$ with Zn and is represented by the formula $[Mg_aZn_bAl_x(OH)_2]^{x+}(A^{n-})_{x/n}.mH_2O$, wherein $0.5 \leq a+b < 1.0$; $0 < x \leq 0.5$ and $a+b = 1-x$; and $a \geq b > 0.03\ a$; preferably $a \geq b > 0.3\ a$; m is a positive number, and A is an n-valent anion. Preferably, the anion is carbonate ion $CO_3^{2-}$.

The zinc-modified hydrotalcite having the formula $Mg_3ZnAl_2(OH)_{12}CO_3.mH_2O$ is available from Kisuma Chemical Industry Co., Ltd. under the trade name of ZHT-4V, and the zinc-modified hydrotalcite having the formula $Mg_{3.5}Zn_{0.5}Al_2(OH)_{12}CO_3.3H_2O$ is available from Sakai Chemical Industry Co., Ltd. under the trade name of STABIACE HT-7 and from Kisuma Chemical Industry Co., Ltd. Under the trade name ZT-100. Zinc-modified hydrotalcite differing in atomic ratios of Mg and Zn to Al from these commercially available products can be synthesized from a water-soluble salt of Mg, Zn and Al by a known method called a coprecipitation method.

The zinc-modified hydrotalcite further is characterized by a particle size distribution, as determined by the laser light scattering granulometry technique, with a volume median particle diameter (D50) comprised between 0.1 and 15 $\mu$m, preferably between 0.1 and 10 $\mu$m, more preferably between 0.1 and 8 $\mu$m.

Zinc-modified hydrotalcite is added in an amount of 1 to 50 parts by weight, preferably 1 to 40 parts by weight, more preferably 1 to 30 parts by weight, most preferably 1 to 25 parts by weight per 100 parts by weight of halogenated polymer.

The zinc-modified hydrotalcite is preferably treated with a surface treatment agent for enabling its uniform dispersion in a vinyl aromatic polymer composition. Examples of such a surface treatment agent include higher fatty acids such as stearic acid, oleic acid, and lauric acid, higher fatty acid metal salts such as sodium stearate and sodium oleate, anionic surfactants such as sodium laurylbenzenesulfonate, silane coupling agents such as vinyltriethoxysilane and gamma-methacryloylpropyltriethoxysilane, titanate coupling agents such as isopropyltriisostearoyl titanate and isopropyltridecylbenzenesulfonyl titanate, glycerin fatty acid esters such as glycerin monostearate and glycerin monooleate, higher fatty acid amides such as stearic acid amide, and waxes.

To the flame-retardant vinyl aromatic polymer composition of the present invention additional stabilizers may further be blended. Blends of the heat stabilizer can further improve heat stability. Examples of such further stabilizers include phosphite compounds, thioether compounds, hindered phenol compounds, hindered amine compounds, organotin compounds, phosphates, and hydrotalcite.

Hydrotalcite compounds having the formula $[Mg_{1-x}Al_x(OH)_2]^{x+}(CO_3)_{x/2}.mH_2O$ wherein $0 < x \leq 0.5$, and m is a positive number, can also be added as an additional heat stabilizer. As one example, synthetic hydrotalcite having the formula $Mg_{4.3}Al_2(OH)_{12.6}CO_3.mH_2O$ is available from Kyowa Chemical Industry Co., Ltd. under the trade name of DHT-4A.

When using the additional stabilizers, the addition amount thereof is up to 50 parts by weight, preferably up to 40 parts by weight, more preferably up to 30 parts by weight, most preferably up to 20 parts by weight per 100 parts by weight of the halogenated polymer.

Expandable vinyl aromatic polymers further generally comprise, per 100 parts of vinyl aromatic polymer, 2 to 10 parts by weight, preferably 3 to 7 parts by weight, of one or more blowing agents distributed homogeneously. Suitable blowing agents are the physical blowing agents usually used in expandable styrene polymers e.g. aliphatic hydrocarbons having from 2 to 7 carbon atoms, alcohols, ketones, ethers, or halogenated hydrocarbons. Preferred blowing agents are isobutane, n-butane, isopentane, or n-pentane.

Various kinds of cell regulators working according to various mechanism are known in the field of polymer foams. Inert particles at polymer melt temperatures such as talc; titanium dioxide; clays such as kaolin; silicagel; calcium polysilicate; gypsum; metal particles; calcium carbonate; calcium sulfate; magnesium carbonate; magnesium hydroxide; magnesium sulfate; barium sulfate; diatomaceous earth; nano-particles such as nano-particles of calcium carbonate, nano clay and nano-graphite work by adsorbing microscopic (mainly liquid) blowing agent particles and improving the dispersion of those particles in the polymer matrix.

Various molecules, the so-called nucleating agents, are also known as cell regulators. Typical products are esters of abietic acids, polyoxyethylene sorbitan monolaurate, Montan wax, Candelilla wax, Carnauba wax, Paraffine wax, Ceresine wax, Japan wax, Petrolite wax, Ceramer wax, polyethylene wax, polypropylene wax and mixtures thereof.

A foam cell regulator of particular interest within the scope of the present invention comprises polyethylene wax.

Examples of polyethylene wax, particularly suitable to be used in the expandable vinyl aromatic compositions, are high density polyethylene waxes characterized by a weight average molecular weight in the range of from 1,500 to 5,000 g/mol and a polydispersity (Mw/Mn) of less than 2.0, preferably less than 1.3, more preferably less than 1.2.

The foam cell regulator is added in such a way that the final expandable vinyl aromatic polymer comprises between 0.01 and 2.0 parts by weight, preferably between 0.05 and 1.0 parts by weight of polyethylene wax per 100 parts of vinyl aromatic polymer.

The expandable vinyl aromatic polymers further can comprise the usual and known auxiliaries and additives, examples being, fillers, UV stabilizers, chain-transfer agents, plasticizers, antioxidants, soluble and insoluble inorganic and/or organic dyes and pigments.

Various processes can be used to produce the particularly preferred expandable vinyl aromatic polymers. After the polymerization process, the melt stream is divided into a first polymer melt stream 1 and a second polymer melt stream 2 (Fig.1). The second polymer melt stream 2 constitutes a loop to take up the first additive package, for example the athermanous particles and foam cell regulator.

In a preferred embodiment, comminuted athermanous particles are taken as starting point together with foam cell regulator. These components are simultaneously fed into the second polymer melt stream 2 of the vinyl aromatic polymer via a mixing unit C, preferably via an extruder. To the first polymer melt stream 1, blowing agent is added from unit D. After dispersion of the first additive package, said second polymer melt stream 2 joins again the first polymer stream 1, comprising blowing agent, to form the new joint polymer melt stream, preferably through a static mixer E.

The vinyl aromatic polymer melt comprising blowing agent, athermanous particles, foam cell regulator and in a later stage flame retardant agent, synergist and heat stabilizer, after homogenization, is rapidly cooled under pressure, in order to avoid foaming. It is therefore advantageous to carry out underwater pelletizing in a closed system under pressure.

Particular preference is given to a process for producing flame-retarded, expandable vinyl aromatic polymers, comprising the steps of:

a) producing a polymer melt stream after the polymerization process;

b) deriving a part of said polymer melt stream and creating a first polymer melt stream 1 and a second polymer melt stream 2;

c) using an extruder for incorporating the comminuted athermanous particles and the foam cell regulator into the second polymer melt stream 2 at a temperature of at least 160°C, preferably comprised between 180°C and 250°C, more preferably between 200°C and 240°C, most preferably between 210°C and 230°C;

d) introducing blowing agent into the first polymer melt stream 1;

e) merging the first (1) and the second (2) polymer melt streams, forming a new joint polymer melt stream;

f) cooling the new joint polymer melt to a temperature of 200°C or less, preferably a temperature comprised between 120°C and 200°C;

g) introducing the flame retardant agent, synergist and heat stabilizer, in particular zinc-modified hydrotalcite, preferably in combination with antioxidant, into the new joint polymer melt stream;

h) discharging through a die plate with holes, the diameter of which at the exit from the die is comprised between 0.3 and 1.5 mm, preferably between 0.5 and 1.0 mm;

i) pelletizing the joint polymer melt stream directly downstream of the die plate under water into a water circuit under a pressure above 3 bar, preferably above 5 bar.

The expandable pellets (beads, granules) can then further be coated and processed to give expanded vinyl aromatic polymer foams, in particular polystyrene foams

In a first step, the expandable vinyl aromatic polymer pellets of the invention can be prefoamed by using hot air or steam, in what are known as prefoamers, to give foam beads of density in the range from 20 to 100 kg/m$^3$, in particular from 15 to 50 kg/m$^3$, the final foaming step focusing a density preferably from 10 to 35 kg/m$^3$. Eventually in order to reach the lower densities a second foaming step can be applied. After maturation, in a next step the foamed beads (to which a coating has been applied) are placed in molds where they are treated with steam and where they are further expanded and fused to give molded foams.

The molded foam is characterized by a thermal conductivity, in accordance to **DIN** 52612, of less than 36 mW/m.K for a foam density of 16 kg/m$^3$ or lower, even of less than 34 mW/m.K for a foam density of 20 kg/m$^3$ or lower, even of less than 31 mW/m.K for a foam density of 25 kg/m$^3$ or lower.

The foam panels derived from the expandable vinyl aromatic polymers according to the present invention all have B2 rating (DIN 4102-1) and the average flame height, according to DIN 4102-1, below 10 cm and the single burning item (SBI) test according EN 13823 and classified according to EN 13501-1 at 20 kg/m$^3$ density and 60 mm thickness of class B.

## **Examples**

The following illustrative examples are merely meant to exemplify the present invention but they are not intended to limit or otherwise define the scope of the present invention.

All the examples comprise 6% by weight of athermanous particle, 0.15 % by weight of high density polyethylene wax with a weight average molecular weight (Mw) of 2 kDa, 1.0 % by weight of Emerald Innovation™ 3000 (Chemtura), 0.33 % by weight, of 2,3-dimethyl-2,3-diphenylbutane (Curox® CC-DC from United Initiators)(synergist). Examples 1 to 3 are according to the invention; examples 4 and 5 are comparative examples, as they comprise hydrotalcite (Heat Stabilizer 1) instead of zinc-modified hydrotalcite.

Examples 1 to 4 comprise 12.5% by weight, relative to Emerald InnovationTM 3000, of heat stabilizer wherein 100 parts of heat stabilizer 1 to 3 comprise 25 parts by weight of Ultranox® 626, an organophosphate supplied by Addivant, 25 parts of Anox® 20, a hindered phenolic supplied by Addivant and 50 parts of:

Table 1

|  | Trade name | Chemical Composition | Manufacturer |
|---|---|---|---|
| Heat Stabilizer 1 | DHT-4A | $Mg_{4.3}Al_2(OH)_{12.6}CO_3.mH_2O$ | Kisuma Chem. Ind. |
| Heat Stabilizer 2 | ZHT-4V | $Mg_3ZnAl_2(OH)_{12}CO_3.mH_2O$ | Kisuma Chem. Ind. |
| Heat Stabilizer 3 | Stabiace HT-7 | $Mg_{3.5}Zn_{0.5}Al_2(OH)_{12}CO_3.3H_2O$ | Sakai Chem. Ind. |

Example 5, comprises 6.75% by weight, relative to Emerald InnovationTM 3000, of heat stabilizer 1.

The foam panels derived from the expandable vinyl aromatic polymers according to the present invention all had B2 rating (DIN 4102).

In table 2 thermal conductivity ($\lambda$, in mW/m.K), determined in accordance to ISO 8301, is reported.

In tables 2 and 3, the test results of the Single Burning Item test, according to EN 13823, and classified according to EN 13501-1; are represented for foams 1 to 3, according to the invention and for the foams of comparative examples 4 and 5.

The values, as reproduced in tables 2 and 3, are the arithmetic mean of two measurement results which do not deviate by more than 10% from their arithmetic mean.

Table 2

| 1 | 2 | 3 | 4 | 5 | 6 | 7 |
|---|---|---|---|---|---|---|
|  | Density (kg/m$^3$) | $\lambda$ (mW/m.K) | FIGRA$_{0.2MJ}$ | t FIGRA$_{0.2MJ}$ | FIGRA$_{0.4MJ}$ | t FIGRA$_{0.4MJ}$ |
| 1 | 20.5 | 30.3 | 56 | 1025 | 56 | 1025 |
| 2 | 20.2 | 30.4 | 44 | 1090 | 56 | 1090 |
| 3 | 19.8 | 29.9 | 25 | 681 | 24 | 686 |
| 4 | 20 | 30.2 | 244 | 506 | 244 | 506 |
| 5 | 20 | 29.5 | 330 | 558 | 330 | 558 |

Table 3

| 1 | 8 | 9 | 10 | 11 | 12 | 13 |
|---|---|---|---|---|---|---|
|  | THR$_{600s}$ | SMOGRA | TSP$_{600s}$ | Class | H$_{aver.}$ | H$_{Max.}$ |
| 1 | 3 | 23 | 113 | B, s2, d0 | 6 | 8 |
| 2 | 3 | 21 | 109 | B, s2, d0 | 5 | 8 |
| 3 | 2 | 8 | 55 | B, s2, d0 | 2 | 2 |
| 4 | 18 | 53 | 553 | D, s3, d0 | 14 | 17 |
| 5 | 29 | 98 | 1038 | D, s3, d0 | 6 | 9 |

Foam panels 1 to 5 were subjected to the Single Burning Item test according to EN13823, for panels having a thickness of 60 mm, mounted and fixed according to EN 15715 and EN 13238. More precisely, the trial conditions are a panel thickness of 60 mm; a calcium silicate as a substrate; no air gap between the panels and the substrate; no air gap between the substrate and the backing board; the presence of horizontal and vertical joints; the use of mechanical fixation (standardized washer and screw).

Results are reported in tables 2 and 3, wherein:

Column 1 represents the foam identification with:

- 1 based on Asbury 4727(needle coke) and heat stabilizer 2;
- 2 based on Asbury 4727(needle coke) and heat stabilizer 3
- 3 based on graphite (Graphite BergBau) type "Grafit 99%" and heat stabilizer 2
- 4 based on Asbury 4727(needle coke) and heat stabilizer 1;
- 5 having exactly the same composition as foam 4, except for the amount of heat stabilizer, which is 50% weight of the amount of foam 4;

wherein the foams of examples 1 to 3 are according to the invention while the foams of examples 4 and 5 are comparative ones.

Column 2 indicates the density in $kg/m^3$ of the respective foam panels, measured at 20°C at standard atmospheric pressure according to ASTM C303;

Column 3 indicates the thermal conductivity ($\lambda$, in mW/m.K), determined in accordance to ISO 8301;

Column 4 indicates the Fire Growth Rate Index (FIGRA), in W/s at a heat release threshold value of 0.2. MJ;

Column 5 indicates the time in seconds to reach the FIGRA $_{0.2\,MJ}$ value;

Column 6 indicates the Fire Growth Rate Index (FIGRA), in W/s at a heat release threshold value of 04. MJ;

Column 7 indicates the time in seconds to reach the FIGRA $_{0.4\,MJ}$ value;

Column 8 indicates the Total Heat Release, in MJ over the first 600 seconds of the test (after the main burner opening);

Column 9 indicates the Smoke Growth Rate index (SMOGRA) in $m^2/s^2$;

Column 10 indicates the Total Smoke Production (TSP) in $m^2$;

Column 11 indicates the class wherein:

B indicates a FIGRA $_{0,2MJ}$ ≤ 120W/s; THR$_{600s}$ ≤ 7.5 MJ
C indicates a FIGRA$_{0,4MJ}$ ≤ 250W/s; THR$_{600s}$ ≤ 15 MJ
D indicates a FIGRA$_{0,4MJ}$ ≤ 750W/s
s1 indicates a SMOGRA ≤ 30 $m^2/s^2$ and a TSP ≤ 50 $m^2$;
s2 indicates a SMOGRA ≤ 180 $m^2/s^2$ and a TSP ≤ 200 $m^2$;
s3 indicates a situation which is not s1 or s2;
d0 indicates no flaming droplets/particles within 600 s;
d1 indicates no flaming droplets/particles persisting longer than 10 s;
d2 indicates a situation which is not d0 or d1.

Column 12 indicates the average flame height within 300 s;

Column 13 indicates the maximum flame height within 300 s;

wherein flame height is measured according DIN 4102-1 at 60 mm thickness.

Contrary to the foams of comparative examples 4 and 5, the foams derived from the expandable vinyl aromatic polymers according to the present invention, all answer the SBI class " B, s2, d0 ".

**Claims**

1. Expandable vinyl aromatic polymer composition comprising:

- from 0.5 to 15, preferably from 1 to 10 parts by weight of dispersed athermanous particles selected from the group consisting of coke, carbon black, graphite and combinations of them, having a volume median particle diameter (D50) comprised between 0.5 and 35 $\mu$m, preferably between 0.8 and 20 $\mu$m, more preferably between 1 and 10 $\mu$m, as obtained from laser light scattering measurements according to ISO 13320 using MEK as solvent for vinyl aromatic polymers;
- from 2 to 10 parts by weight, preferably from 3 to 7 parts by weight of blowing agent;
- from 0.2 to 5 parts by weight, preferably from 0.3 to 4 parts by weight, more preferably from 0.4 to 3 parts by weight of a halogenated flame retardant; and
- from 0.02 to 5 parts by weight, preferably from 0.025 to 4 parts by weight of a zinc-modified hydrotalcite;

per 100 parts of vinyl aromatic polymer wherein the halogenated flame retardant is a halogenated block copolymer, **characterized by** a weight average molecular weight comprised between 20,000 and 300,000 g/mol, preferably between 30,000 and 200,000 g/mol, as determined by gel permeation chromatography against polystyrene standards and comprising:

- from 20 to 60 % by weight, preferably from 30 to 50 % by weight of sequences (A) of polymerized monovinyl arenes and from 40 to 80 % by weight, preferably from 50 to 70 % by weight of sequences (B) of polymerized conjugated alkadienes or copolymerized conjugated alkadienes and monovinyl arenes; and
- from 20 to 80 % by weight, preferably from 40 to 70 % by weight of halogen substituents, preferably bromine.

2. The expandable vinyl aromatic polymer composition according to claim 1 additionally comprising from 0.02 to 5.0 parts by weight, preferably from 0.025 to 4 parts by weight of a stabilizer selected from the group consisting of organophosphites, hindered phenolic antioxidants and mixtures thereof.

3. The expandable vinyl aromatic polymer composition according to any of the preceding claims wherein the halogenated block copolymer is a brominated styrene-butadiene block copolymer **characterized by** a 5 % by weight loss at a temperature of at least 250°C, preferably at a temperature of at least 260°C, as obtained from thermogravimetric analysis according to ISO11358.

4. The expandable vinyl aromatic polymer composition according to any of the preceding claims comprising between 0.05 and 5 % by weight, preferably between 0.1 and 3.0 % by weight of a flame retardant synergist, preferably a radical generator of the type comprising a C-C, C-O-O-C or S-S thermo-labile bond.

5. The expandable vinyl aromatic polymer composition according to any of the preceding claims wherein the blowing agent is a C3 - C6 alkane, preferably a C4 -C5 alkane blowing agent or a mixture thereof.

6. The expandable vinyl aromatic polymer composition according to any of the preceding claims wherein the zinc modified hydrotalcite is of the formula

$$[Mg_aZn_bAl_x(OH)_2]^{x+}(A^{n-})_{x/n}.mH_2O,$$

wherein:

$$0.5 \leq a+b < 1.0;$$

$$0 < x \leq 0.5$$

and

$$a+b = 1-x;$$

m is a positive number,
and A is an n-valent anion.

7. The expandable vinyl aromatic polymer composition according to any of the preceding claims comprising from 0.01 to 2.0 parts by weight, preferably from 0.05 to 1 parts by weight of high density polyethylene as cell regulator, per 100 parts of vinyl aromatic polymer.

8. The expandable vinyl aromatic polymer according to any of the preceding claims wherein the polyethylene is **characterized by** a weight average molecular weight (Mw) comprised between 1,500 and 10,000 g/mol, preferably between 1,500 and 8,000 g/mol, more preferably between 1,500 and 6,000 g/mol and with a polydispersity of 3 or less, preferably of 2 or less, more preferably of 1.5 or less, and most preferably of 1.2 or less, as determined by gel permeation chromatography (GPC) in tetrahydrofuran using polystyrene standards.

9. Process for the preparation of beads or granules of the expandable vinyl aromatic polymer according to any of the preceding claims comprising the steps of:

a) producing a polymer melt stream after the polymerization process of the vinyl aromatic monomer;
b) deriving a part of said polymer stream and creating a first polymer melt stream (1) and a side loop with a second polymer melt stream (2);
c) dispersing at least the athermanous particles and the foam cell regulator into said second polymer melt stream (2);
d) introducing a blowing agent into the first polymer melt stream (1);
e) joining the second polymer melt stream (2) and the first polymer melt stream (1) and forming a new joint polymer melt stream
f) cooling the new joint polymer melt stream to a temperature of 200°C or less;
g) introducing at least one halogenated flame retardant, flame retardant synergist and zinc-modified hydrotalcite into the said cooled new joint polymer melt stream;
h) discharging the cooled new joint polymer melt stream through a die plate with holes and pelletizing the melt under water into a water circuit under a pressure above 3 bar, preferably above 5 bar.

10. Process according to claim 9 wherein the second polymer melt stream (2) of step b) comprises between 5 and 30 % by weight of the total polymer melt stream.

11. Process according to claim 9 or 10 wherein, in step c), the athermanous particles and the foam cell regulator are dispersed in the second polymer melt stream (2) by means of an extruder.

12. Process according to any of claims 9 to 11 wherein the dispersion in step c) is performed at a temperature comprised between 180°C and 250°C, more preferably between 200°C and 240°C, most preferably between 210 and 230°C.

13. Process according to any of claims 9 to 12 wherein in step g) one or more additional stabilizer(s) are added, said stabilizers being selected from the group consisting of organophosphite and hindered phenolic antioxidants.

14. Polymer foams obtained from the molding of expanded vinyl aromatic polymers obtained by the expansion of the expandable vinyl aromatic polymer composition according to any of the preceding claims 1 to 9, said foams being **characterized by**:

- a thermal conductivity, in accordance to DIN 52612, of less than 34 mW/m.K, for a foam density, in accordance to ASTM 303 C, of less than 20 kg/m$^3$;
- a fire retardancy with B2 rating, in accordance to DIN 4102-1;
- a flame height of less than 10 cm according to DIN 4102-1 at 60 mm thickness.

**Patentansprüche**

1. Expandierbare vinylaromatische Polymerzusammensetzung, umfassend:

- von 0,5 bis 15, bevorzugt von 1 bis 10 Gewichtsteile dispergierte athermane Partikel, die ausgewählt sind aus der Gruppe bestehend aus Koks, Kohlenschwarz, Graphit und deren Kombinationen, die einen mittleren Volumen-Partikeldurchmesser (D50) aufweisen, der zwischen 0,5 und 35 $\mu$m, bevorzugt zwischen 0,8 und 20 $\mu$m, mehr bevorzugt zwischen 1 und 10 $\mu$m umfasst ist, erhalten aus Laserlichtstreuungsmessungen nach ISO 13320 unter Verwendung von MEK als Lösungsmittel für vinylaromatische Polymere;
- von 2 bis 10 Gewichtsteile, bevorzugt von 3 bis 7 Gewichtsteile Treibmittel;
- von 0,2 bis 5 Gewichtsteile, bevorzugt von 0,3 bis 4 Gewichtsteile, mehr bevorzugt von 0,4 bis 3 Gewichtsteile eines halogenierten Flammschutzmittels; und
- von 0,02 bis 5 Gewichtsteile, bevorzugt von 0,025 bis 4 Gewichtsteile eines zinkmodifizierten Hydrotalcits;

pro 100 Teile vinylaromatischem Polymer, wobei das halogenierte Flammschutzmittel ein halogeniertes Block-Copolymer ist, **gekennzeichnet durch** ein gewichtsgemitteltes Molekulargewicht, das zwischen 20.000 und 300.000 g/mol, bevorzugt zwischen 30.000 und 200.000 g/mol umfasst ist, bestimmt durch Gelpermeationschromatographie anhand von Polystyrol-Normen und umfassend:

- von 20 bis 60 Gew.-%, bevorzugt von 30 bis 50 Gew.-% von Sequenzen (A) von polymerisierten Monovinylarenen und von 40 bis 80 Gew.-%, bevorzugt von 50 bis 70 Gew.-% von Sequenzen (B) von polymerisierten konjugierten Alkadienen oder copolymerisierten konjugierten Alkadienen und Monovinylarenen; und
- von 20 bis 80 Gew.-%, bevorzugt von 40 bis 70 Gew.-% von Halogensubstituenten, bevorzugt Bromin.

2. Expandierbare vinylaromatische Polymerzusammensetzung nach Anspruch 1, zusätzlich umfassend von 0,02 bis 5,0 Gewichtsteile, bevorzugt von 0,025 bis 4 Gewichtsteile eines Stabilisators, der ausgewählt ist aus der Gruppe bestehend aus Organophosphaten, gehinderten phenolischen Antioxidantien und Gemischen derselben.

3. Expandierbare vinylaromatische Polymerzusammensetzung nach einem der vorhergehenden Ansprüche, wobei das halogenierte Block-Copolymer ein bromiertes Styrol-Butadien-Block-Copolymer ist, **gekennzeichnet durch** einen Verlust von 5 Gew.-% bei einer Temperatur von mindestens 250 °C, bevorzugt bei einer Temperatur von mindestens 260 °C, erhalten aus einer thermogravimetrischen Analyse nach ISO11358.

4. Expandierbare vinylaromatische Polymerzusammensetzung nach einem der vorhergehenden Ansprüche, umfassend zwischen 0,05 und 5 Gew.-%, bevorzugt zwischen 0,1 und 3,0 Gew.-% eines Flammschutzsynergisten, bevorzugt eines Radikalbildners des Typs, der eine thermolabile C-C-, C-O-O-C- oder S-S-Bindung umfasst.

5. Expandierbare vinylaromatische Polymerzusammensetzung nach einem der vorhergehenden Ansprüche, wobei das Treibmittel ein C3 - C6 Alkan-, bevorzugt ein C4 - C5 Alkan-Treibmittel oder ein Gemisch derselben ist.

6. Expandierbare vinylaromatische Polymerzusammensetzung nach einem der vorhergehenden Ansprüche, wobei das zinkmodifizierte Hydrotalcit aus der folgenden Formel ist:

$$[Mg_aZn_bAl_x(OH)_2]^{x+}(A^{n-})_{x/n} \cdot mH_2O,$$

wobei:

$$0,5 \leq a+b < 1,0;$$

$$0 < x \leq 0,5$$

und

$$a+b = 1-x;$$

m eine positive Zahl ist,
und A ein n-wertiges Anion ist.

7. Expandierbare vinylaromatische Polymerzusammensetzung nach einem der vorhergehenden Ansprüche, umfassend von 0,01 bis 2,0 Gewichtsteile, bevorzugt von 0,05 bis 1 Gewichtsteile eines hochdichten Polyethylens als Zellregulator, pro 100 Teile eines vinylaromatischen Polymers.

8. Expandierbares vinylaromatisches Polymer nach einem der vorhergehenden Ansprüche, wobei das Polyethylen **gekennzeichnet ist durch** ein gewichtsgemitteltes Molekulargewicht (Mw), das zwischen 1.500 und 10.000 g/mol, bevorzugt zwischen 1.500 und 8.000 g/mol, mehr bevorzugt zwischen 1.500 und 6.000 g/mol umfasst ist, und mit einer Polydispersität von 3 oder weniger, bevorzugt 2 oder weniger, mehr bevorzugt 1,5 oder weniger und am meisten bevorzugt 1,2 oder weniger, bestimmt durch Gelpermeationschromatographie (GPC) in Tetrahydrofuran unter Verwendung von Polystyrol-Normen.

9. Prozess zur Herstellung von Kugeln oder Granulat des expandierbaren vinylaromatischen Polymers nach einem der vorhergehenden Ansprüche, die folgenden Schritte umfassend:

a) Erzeugen eines Polymerschmelzestroms nach dem Polymerisierungsprozess des vinylaromatischen Monomers;

b) Ableiten eines Teils des Polymerstroms und Hervorbringen eines ersten Polymerschmelzestroms (1) und einer Seitenschleife mit einem zweiten Polymerschmelzestrom (2);

c) Dispergieren mindestens der athermanen Partikel und des Schaumzellregulators in den zweiten Polymerschmelzestrom (2);

d) Einleiten eines Treibmittels in den ersten Polymerschmelzestroms (1);

e) Zusammenführen des zweiten Polymerschmelzestroms (2) und des ersten Polymerschmelzestroms (1) und Ausbilden eines neuen zusammengeführten Polymerschmelzestroms

f) Kühlen des neuen zusammengeführten Polymerschmelzestroms auf eine Temperatur von 200 °C oder weniger;

g) Einleiten mindestens eines halogenierten Flammschutzmittels, eines Flammschutzsynergisten und eines zinkmodifizierten Hydrotalcits in den gekühlten neuen zusammengeführten Polymerschmelzestrom;

h) Abführen des gekühlten neuen zusammengeführten Polymerschmelzestroms durch eine Formplatte und Pelletieren der Schmelze unter Wasser in einen Wasserkreislauf unter einem Druck von über 3 bar, bevorzugt über 5 bar.

10. Prozess nach Anspruch 9, wobei der zweite Polymerschmelzestrom (2) aus Schritt b) zwischen 5 und 30 Gew.-% des gesamten Polymerschmelzestroms umfasst.

11. Prozess nach Anspruch 9 oder 10, wobei in Schritt c) die athermanen Partikel und der Schaumzellregulator mittels eines Extruders in den zweiten Polymerschmelzestrom (2) dispergiert werden.

12. Prozess nach einem der Ansprüche 9 bis 11, wobei die Dispersion in Schritt c) bei einer Temperatur durchgeführt wird, die zwischen 180 °C und 250 °C, mehr bevorzugt zwischen 200 °C und 240 °C, am meisten bevorzugt zwischen 210 °C und 230 °C umfasst ist.

13. Prozess nach einem der Ansprüche 9 bis 12, wobei in Schritt g) ein oder mehrere zusätzliche Stabilisator(en) hinzugefügt werden, wobei die Stabilisatoren ausgewählt sind aus der Gruppe bestehend aus Organophoshphat und gehinderten phenolischen Antioxidantien.

14. Polymerschäume, die erhalten werden aus dem Schmelzen von expandierten vinylaromatischen Polymeren, die erhalten werden aus der Expansion der expandierbaren vinylaromatischen Polymerzusammensetzung nach einem der vorhergehenden Ansprüche 1 bis 9, wobei die Schäume **gekennzeichnet sind durch**:

- eine thermische Leitfähigkeit nach DIN 52612 von weniger als 34 mW/m.K für eine Schaumdichte nach ASTM 303 C von weniger als 20 kg/m$^3$;
- einem Flammschutz mit B2-Einstufung nach DIN 4102-1;
- eine Flammenhöhe von weniger als 10 cm nach DIN 4102-1 bei einer Dicke von 60 mm.

## Revendications

1. Composition de polymère aromatique vinylique expansible comprenant :

- de 0,5 à 15, de préférence de 1 à 10 parties en poids de particules athermanes dispersées sélectionnées dans le groupe constitué de coke, noir de carbone, graphite et leurs combinaisons, présentant un diamètre médian en volume des particules (D50) compris entre 0,5 et 35 μm, de préférence entre 0,8 et 20 μm, plus préférentiellement entre 1 et 10 μm, tel qu'obtenu par des mesures de diffusion de la lumière laser selon l'ISO 13320 en utilisant du MEK comme solvant pour les polymères aromatiques vinyliques ;
- de 2 à 10 parties en poids, de préférence de 3 à 7 parties en poids d'agent d'expansion ;
- de 0,2 à 5 parties en poids, de préférence de 0,3 à 4 parties en poids, plus préférentiellement de 0,4 à 3 parties en poids d'un retardateur de flamme halogéné ; et
- de 0,02 à 5 parties en poids, de préférence de 0,025 à 4 parties en poids d'un hydrotalcite modifié au zinc ;

pour 100 parties de polymère aromatique vinylique, dans laquelle le retardateur de flamme halogéné est un copolymère séquencé halogéné, **caractérisé par** une masse molaire moyenne en poids comprise entre 20 000 et 300 000 g/mol, de préférence entre 30 000 et 200 000 g/mol, telle que déterminée par chromatographie de perméation sur gel sur des étalons de polystyrène et comprenant :

- de 20 à 60 % en poids, de préférence de 30 à 50 % en poids de séquences (A) d'arènes monovinyliques polymérisés et de 40 à 80 % en poids, de préférence de 50 à 70 % en poids de séquences (B) d'alcadiènes conjugués polymérisés ou d'alcadiènes conjugués et d'arènes monovinyliques copolymérisés ; et
- de 20 à 80 % en poids, de préférence de 40 à 70 % en poids de substituants halogènes, de préférence du brome.

2. Composition de polymère aromatique vinylique expansible selon la revendication 1 comprenant en outre de 0,02 à 5,0 parties en poids, de préférence de 0,025 à 4 parties en poids d'un stabilisant sélectionné dans le groupe constitué d'organophosphites, d'antioxydants phénoliques encombrés et de leurs mélanges.

3. Composition de polymère aromatique vinylique expansible selon l'une quelconque des revendications précédentes, dans laquelle le copolymère séquencé halogéné est un copolymère séquencé styrène-butadiène bromé, **caractérisé par** une perte de 5 % en poids à une température d'au moins 250 °C, de préférence à une température d'au moins 260 °C, telle qu'obtenue par analyse thermogravimétrique selon l'ISO 11358.

4. Composition de polymère aromatique vinylique expansible selon l'une quelconque des revendications précédentes comprenant entre 0,05 et 5 % en poids, de préférence entre 0,1 et 3,0 % en poids d'un synergiste retardateur de flamme, de préférence un générateur de radicaux du type comprenant une liaison thermolabiles C-C, C-O-O-C ou S-S.

5. Composition de polymère aromatique vinylique expansible selon l'une quelconque des revendications précédentes, dans laquelle l'agent d'expansion est un alcane C3 -C6, de préférence un agent d'expansion alcane C4-C5 ou un mélange de ceux-ci.

6. Composition de polymère aromatique vinylique expansible selon l'une quelconque des revendications précédentes, dans laquelle l'hydrotalcite modifié au zinc est de formule :

$$[Mg_aZn_bAl_x(OH)_2]^{x+}(A^{n-})_{x/n}.mH_2O,$$

dans laquelle :

$$0,5 \leq a+b < 1,0 \;;$$

$$0< x \leq 0,5$$

et

$$a+b = 1-x \;;$$

m est un nombre positif,
et A est un anion n-valent.

7. Composition de polymère aromatique vinylique expansible selon l'une quelconque des revendications précédentes comprenant de 0,01 à 2,0 parties en poids, de préférence de 0,05 à 1 partie en poids de polyéthylène haute densité en tant que régulateur de cellules, pour 100 parties de polymère aromatique vinylique.

8. Polymère aromatique vinylique expansible selon l'une quelconque des revendications précédentes, dans lequel le polyéthylène est **caractérisé par** une masse molaire moyenne en poids (Mw) comprise entre 1 500 et 10 000 g/mol, de préférence entre 1 500 et 8 000 g/mol, plus préférentiellement entre 1 500 et 6 000 g/mol et avec une polydispersité de 3 ou moins, de préférence de 2 ou moins, plus préférentiellement de 1,5 ou moins, et très préférentiellement de 1,2 ou moins, telle que déterminée par chromatographie de perméation sur gel (GPC) dans du tétrahydrofurane en utilisant des étalons de polystyrène.

9. Procédé de préparation de perles ou granulés du polymère aromatique vinylique expansible selon l'une quelconque des revendications précédentes, comprenant les étapes consistant à :

a) la production d'un flux de polymère fondu après le procédé de polymérisation du monomère aromatique vinylique ;

b) le prélèvement d'une partie dudit flux de polymère et la création d'un premier flux de polymère fondu (1) et d'une boucle latérale avec un deuxième flux de polymère fondu (2) ;

c) la dispersion d'au moins les particules athermanes et le régulateur de cellules de mousse dans ledit deuxième flux de polymère fondu (2) ;

d) l'introduction d'un agent d'expansion dans le premier flux de polymère fondu (1) ;

e) la réunification du deuxième flux de polymère fondu (2) et du premier flux de polymère fondu (1) et la formation d'un nouveau flux conjoint de polymère fondu ;

f) le refroidissement du nouveau flux conjoint de polymère fondu à une température de 200 °C ou moins ;

g) l'introduction d'au moins un retardateur de flamme halogéné, d'un synergiste retardateur de flamme et d'hydrotalcite modifié au zinc dans ledit nouveau flux conjoint de polymère fondu refroidi ;

h) l'évacuation du nouveau flux conjoint de polymère fondu refroidi au travers d'une plaque de filière percée d'orifices et la granulation de la masse fondue sous eau dans un circuit d'eau à une pression supérieure à 3 bar, de préférence supérieure à 5 bar.

10. Procédé selon la revendication 9, dans lequel le deuxième flux de polymère fondu (2) de l'étape b) représente entre 5 et 30 % en poids du flux total de polymère fondu.

11. Procédé selon la revendication 9 ou 10, dans lequel, à l'étape c), les particules athermanes et le régulateur de cellules de mousse sont dispersés dans le deuxième flux de polymère fondu (2) au moyen d'une extrudeuse.

12. Procédé selon l'une quelconque des revendications 9 à 11, dans lequel la dispersion à l'étape c) est mise en œuvre à une température comprise entre 180 °C et 250 °C, plus préférentiellement entre 200 °C et 240 °C, et très préférentiellement entre 210 et 230 °C.

13. Procédé selon l'une quelconque des revendications 9 à 12, dans lequel, à l'étape g), un ou plusieurs stabilisant(s) supplémentaire(s) sont ajoutés, lesdits stabilisants étant sélectionnés dans le groupe constitué d'organophosphites et d'antioxydants phénoliques encombrés.

14. Mousses polymères obtenues à partir du moulage de polymères aromatiques vinyliques expansés obtenus par l'expansion de la composition de polymère aromatique vinylique expansible selon l'une quelconque des revendications 1 à 9, lesdites mousses étant **caractérisées par** :

- une conductivité thermique, conformément à la norme DIN 52612, inférieure à 34 mW/m.K, pour une densité de mousse, conformément à l'ASTM 303 C, inférieure à 20 kg/m$^3$ ;
- une résistance au feu avec une classification B2, conformément à la norme DIN 4102-1 ;
- une hauteur de flamme inférieure à 10 cm selon la norme DIN 4102-1 à 60 mm d'épaisseur.

Fig .1

**EP 4 025 635 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1486530 A
- EP 620246 A
- EP 0915127 A
- EP 1945700 A
- EP 1877473 A
- EP 2274370 A
- EP 2358798 A
- EP 2454313 A
- EP 372343 A
- EP 674674 A
- EP 902804 A
- EP 863175 A
- EP 1137701 A
- EP 1102807 A
- EP 0981575 A
- EP 2513209 A
- DE 19910257
- DE 202010013850
- US 2011213045 A
- WO 9745477 A
- WO 9851735 A
- WO 2004087798 A
- WO 2008061678 A
- WO 2010128369 A
- WO 2010141400 A
- WO 2011042800 A
- WO 2011133035 A
- WO 2011110333 A
- WO 2011122034 A
- WO 2013064444 A
- WO 2014102139 A
- WO 2014063993 A
- WO 2014102137 A
- WO 2014122190 A
- JP 2005002268 B
- WO 2014027888 A
- WO 2013009469 A
- EP 1957544 A
- EP 2379628 A
- EP 2998347 A
- EP 3301134 A
- EP 2921520 A
- WO 2018069178 A
- WO 2008021417 A
- WO 2010114637 A
- WO 2009134628 A
- WO 2008021418 A